# EUROPEAN PATENT SPECIFICATION

(11) **EP 3 479 001 B1**
(45) Date of publication and mention of the grant of the patent: **01.06.2022**
(21) Application number: 17703688.6
(22) Date of filing: 31.01.2017
(51) Int. Cl.: F16L 21/08, F16L 23/028

(54) **SYSTEM TO CONNECT A FIRST PIPE AND A SECOND PIPE**
SYSTEM ZUM VERBINDEN EINES ERSTEN UND EINES ZWEITEN ROHRES
SYSTÈME PERMETTANT DE RELIER UN PREMIER TUYAU ET UN SECOND TUYAU

(30) Priority: 30.06.2016 EP 16305802
(43) Date of publication of application: 08.05.2019
(73) Proprietor: TOTAL SE, 92400 Courbevoie (FR)
(72) Inventor: PACULL, Renaud, 75015 Paris (FR); ROQUES, Jean-Philippe, 78400 Chatou (FR)
(74) Representative: Plasseraud IP
(86) International application number: PCT/EP2017/051977
(87) International publication number: WO 2018/001575

(56) References cited:
- EP-A1- 2 136 119
- JP-A- S52 121 815
- KR-B1- 100 872 765
- US-A- 5 437 482
- US-A- 5 899 507
- US-A1- 2011 084 484

## Description

### BACKGROUND OF THE INVENTION

The present invention relates to the transport of oil/gas/chemical liquid from floating production storage and offloading to an offloading buoy, for instance in the context of deep-water offshore fields.

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section. Furthermore, all embodiments are not necessarily intended to solve all or even any of the problems brought forward in this section.

In deep-water offshore fields, the produced oil is generally offloaded to shuttle tankers via oil offloading lines (OOL) connected between the floating production storage and offloading (FPSO) and offloading buoy.

Three types of oil offloading lines (OOL) are often used for the transfer of stabilized crude oil between the FPSO and the offloading buoy:
- bonded pipe or
- unbonded pipe.
- steel pipe

This non-convergence to a unique type of concept shows that an ideal concept in terms of cost, constructability, efficiency, and safety has not been exhibited within the industry yet.

Most of the available OOL are very complex to bring on the producing sites and to install between the FPSO and the offloading buoy: heavy boats should be used to transport these pipes and to install them for production. The cost of such installation may be up to 8-10k€ per meter (the length of a normal OOL is about 2500m).

The application PCT n° IB2016/000928 discloses a cost-effective and safe OOL having an external pipe primarily composed of High Density Polyethylene (HDPE).

Nevertheless, the conventional method to connect a HDPE line to a steel connector may have some drawbacks. As a matter of fact, the developments below are made for HDPE but they are applicable to any material that has a tendency to move slowly or deform permanently under the influence of long-term mechanical stresses (creep).

It is possible to join HDPE pipe by heat fusion (butt, socket and saddle) but in the present case, joining a HDPE pipe and a steel/metal connector is not possible thanks to this technique.

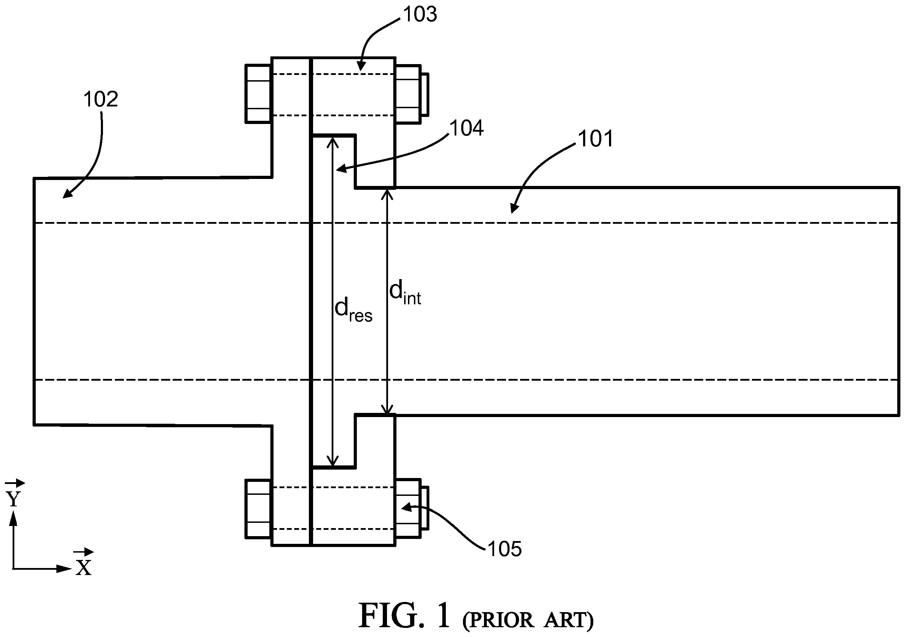

Another technique applicable to join an HDPE pipe and a steel/metal connector/spool is described in relation of Figure 1.

In figure 1, the HDPE pipe 101 and the steel pipe 102 is joined together thanks to a "flange adapter" 103 (or "stub end", which is usually a shorter version of the "flange adapter").

The "flange adapter" is designed so that its internal diameter dᵢₙₜ is about the diameter of the HDPE pipe 101 but smaller than a diameter dᵣₑₛ of the recess 104 (the recess may also be named grip ring in some configuration) configured at an end of the HDPE pipe 101.

The flange adapter is attached to the steel pipe 102 by the way of nuts and bolts 105 (or any other attaching means). Most of the time, and to guarantee a correct sealing, the recess 104 is crushed by the flange adapter against the end of steel pipe 102.

Therefore, the long-term mechanical stresses may be important on the recess 104. As the HDPE is a material that has a tendency to move slowly or deform permanently under the influence of long-term mechanical stresses (creep), this configuration described in relation of Figure 1 is not adapted to dynamic installations (such OOL with bending stresses, tension stresses, etc.) where the pipe should be safe for years.

In addition, it is possible to connect two pipes with an "insert stiffener": a stiffener is inserted in the pipes to be connected and external compression nuts/rings apply a concentric force to the pipes. Nevertheless, this design is only acceptable with small diameter as the inside of the pipe wall should be supported by the stiffener to avoid deflection of the pipe. This solution is thus not applicable to the OOL concept with large HDPE diameters.

There is thus a need for a design that allows a safe and durable connection between two pipes so that to reduce the mechanical damages that may suffer the joined pipes (especially if one of the pipes is subject to creep deformations). KR 100872765 B1, JP S52 121815 A and US 5899507 A disclose systems for connecting two pipes.

### SUMMARY OF THE INVENTION

The invention relates to a system to connect a first pipe and a second pipe as defined in claim 1.

Thanks to the locking ring, the first pipe is only tightened and not compressed. Therefore the stresses on the first pipe are limited. The stress applied to the first pipe may be adapted to be below the creep limit for the material forming the first pipe.

By taking the major part of the pull-out stress / force, the locking ring avoid any creep / damage / crushing of the nozzle recess (if any) of the first pipe. The stresses on the first pipe are thus limited.

Therefore the life expectancy of the first pipe (especially if the first pipe is a HDPE pipe) is increased.

In a specific embodiment, the locking ring may be an open ring.

According to the invention, the corresponding beveled portion is part of a middle flange that is installed between the locking flange and the second pipe.

Therefore, it is possible to adapt to any standard pipe / tube / adapter / connection a middle flange that provides the beveled portion and allows the locking ring to tighten the first pipe.

The first pipe has a nozzle recess and the middle flange holds said nozzle recess.

Therefore, it is possible to maintain the nozzle recess and to share the stresses / forces between a plurality of portions of the first pipe.

In a possible embodiment, the locking ring may be formed of metal material.

Indeed, the locking ring is supposed to provide a friction force on the first pipe.

Therefore, it is advantageous to avoid any material that may be easily deformed when compressed (such as natural rubber, elastomer, plastic, etc. that may be adequate for sealing only purpose).

The locking ring may be a translation blocking element for the first pipe in regard of the second pipe.

A surface of the locking ring may be adapted to increase the friction (e.g. surface treatments, waves, indentations, ridges, etc.).

In addition, a coating may be installed between the locking ring and the first pipe and wherein the coating is formed of an elastomer material.

Therefore, when compressed between the locking ring and the first pipe, this coating may provide an additional friction effect to assure the adherence between the locking ring and the first pipe.

The first pipe is formed of at least 60% of High Density Polyethylene (HDPE). As the HDPE is subject to creep, it is advantageous to use the system described above.

The first pipe is adapted to be used in an oil offloading line. Due to the important diameter of the pipe (ex. >40cm), the prior art solution using compression method or stiffener device are not adapted.

### BRIEF DESCRIPTION OF THE DRAWINGS

The present invention is illustrated by way of example, and not by way of limitations, in the figures of the accompanying drawings, in which like reference numerals refer to similar elements and in which:
- Figure 1 is a cross-sectional view of a connection between two pipes in the prior art;
- Figures 2a - 2c are cross-sectional views of three different systems for connecting two pipes; the system of figure 2a is an embodiment of the present invention; the systems of figures 2b and 2c are not comprised by the present invention;
- Figure 3 is a 3D view of the connection described in relation of figure 2a; invention;
- Figure 4 is an enlargement view of the locking ring according to one embodiment of the invention.

### DESCRIPTION OF PREFERRED EMBODIMENTS

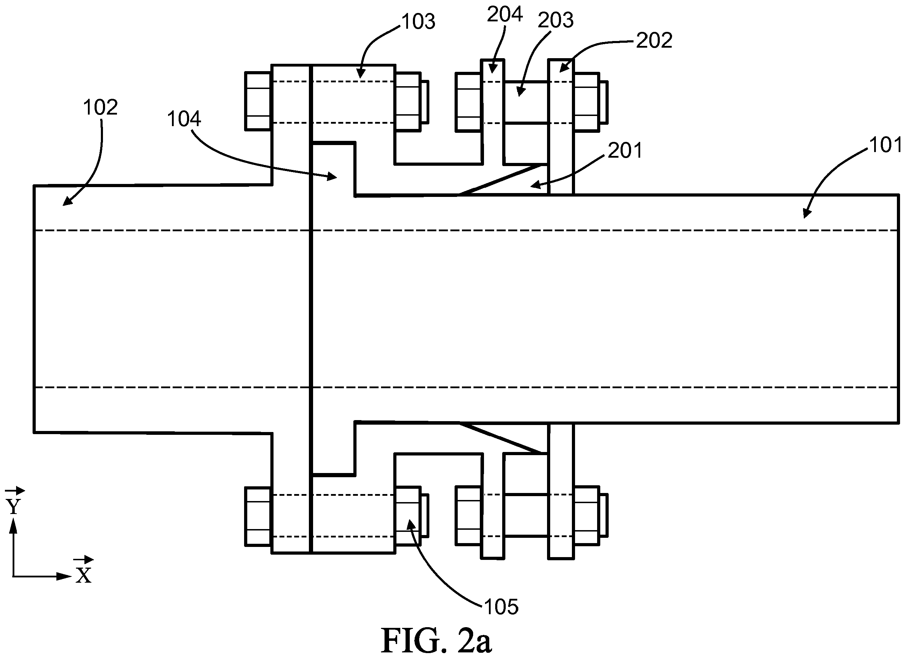

Figures 2a - 2c are cross-sectional views of three different examples of a connection between two pipes.

In these Figures, the pipe 102 may be for instance an intermediate piece that should be connected to the bounded hose (e.g. the bounded hose is bolted directly to the intermediate piece) or the bounded hose directly if it is technically possible. The pipe 101 is typically an HDPE pipe.

In the configuration of Figure 2a, the nozzle recess 104 of the HDPE pipe 101 is sandwiched between the pipe 102 and the middle flange 103 (which is bolted to the pipe 102 with bolts and nuts 105).

This middle flange comprises an additional ring 204 to which a locking flange 202 may be attached (e.g. with bolts and nuts 203).

When the locking flange 202 is bolted to the ring 204, the locking flange moves in the -*̅x̅*̅ direction (i.e. along the longitudinal axis of the pipe 101). Therefore, this locking flange 202 may push the locking ring 201 along this direction -*̅x̅*̅ during the bolts tensioning.

By being pushed along the -*̅x̅*̅ direction and as the locking ring 201 has a beveled part, the beveled part slides on a corresponding beveled portion of the middle flange 103 and slightly tights the pipe 101. As this tightening may slightly reduce the diameter of the locking ring, it is advantageous to have an open locking ring (i.e. the ring is not a close ring - a couple of millimeters may have been removed/cut from a closed ring) to ease this tightening.

The contact surface between the locking ring 201 and the pipe 101 may be quite important (ex. 5 cm) to improve the friction force that the locking ring 201 may apply to the pipe 101 in reaction to a pull-out force applied to the pipe 101. The material of the locking ring 201 may be chosen to increase the frictions between the locking ring and the pipe 101. Surface treatments may be applied to the locking ring 201 to increase the frictions between the locking ring and the pipe 101. Additional coating (ex. elastomer coating) may be installed between the locking ring 201 and the pipe 101 to increase the frictions between the locking ring and the pipe 101. Additional ridges, indentation, etc. may be formed on the locking ring to increase the friction. In addition, a surface treatment may be also applied to the locking ring 201 and/or to the element 103 or 102 to limit the frictions between these parts (ex. Teflon coating, metal-metal contact, etc.).

This arrangement enables to transmit a major part of the tensile force of the HDPE line by friction, which reduces the stresses normally apply to the nozzle recess in prior art solution (see above): the compression forces (i.e. concentric forces) are limited while the friction forces may be quite important.

The friction force (i.e. the norm of the friction force) between the locking ring 201 and the first pipe 101 may be greater than 60%-80% of a pull-out force (i.e. the norm of the pull-out force), in response to of said pull-out force directed in *̅x̅*̅ direction to the pipe 101: therefore, it is possible to maintain the pipes 101 and 102 together thanks to (mainly) this friction force. The remainder forces (40%-20% of the pull-out force) may be supported by the rest of the system such as the nozzle recess.

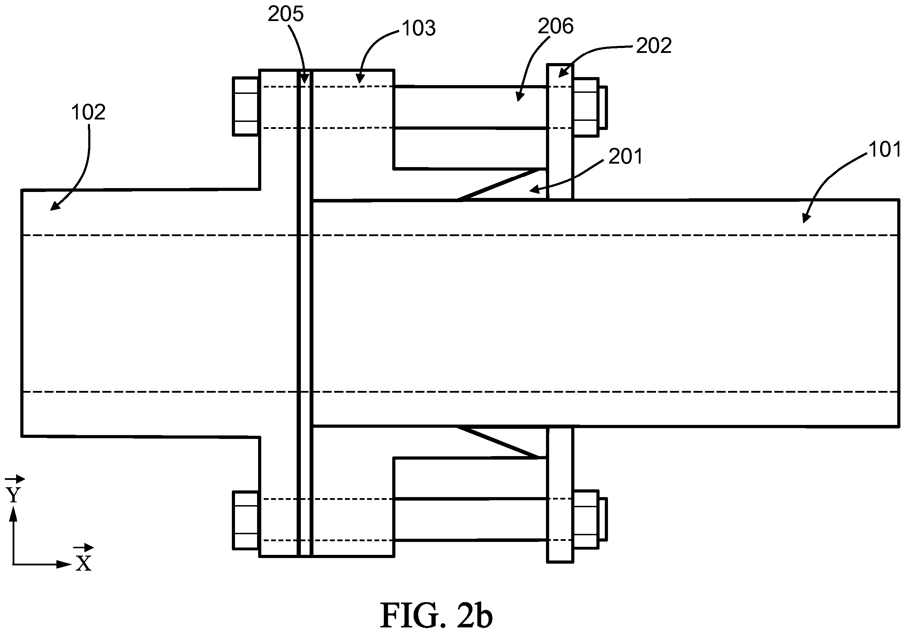

Figure 2b is a variation of the system described in relation of Figure 2a. Each difference between the presented examples is stand-alone difference and may be implemented independently of the others.

In this embodiment, the pipe 101 has no nozzle recess 104.

In addition, the middle flange does not have an additional ring 204 as each bolt and nut passes through the pipe 102, the middle flange 103 and the locking flange 202.

Finally, a protection flange 205 may be installed between the pipe 102 and the middle flange 103 to assure a correct sealing (ex. watertightness). A flange joint may be used by creating grooves on surfaces to be connected. A surface-to-surface contact interaction may be created between the pipe 102 and the protection flange 205 and between the pipe 101 and the protection flange 205.

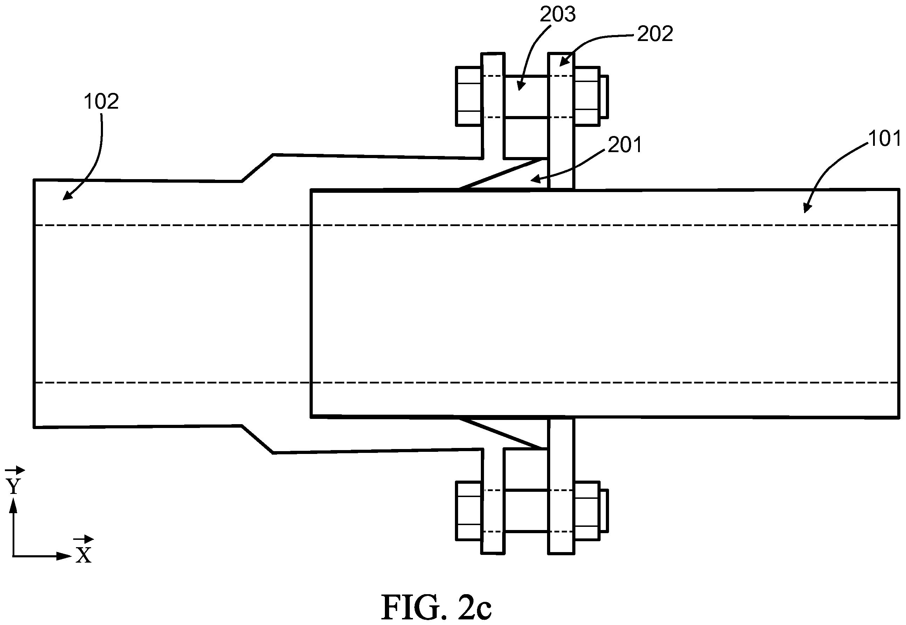

Figure 2c is a variation of the system described in relation of Figures 2a and 2b.

Each difference between the presented examples is stand-alone difference and may be implemented independently of the others.

In this example, no middle flange exists but the structure of the pipe 102 enables the same function (i.e. with the presence of the additional ring 204).

The pipe 101 is inserted in a part of the pipe 102.

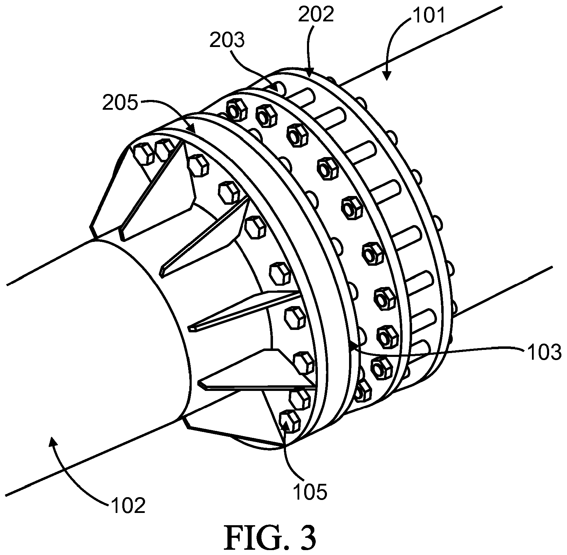

Figure 3 is a 3D view of the connection described in relation of figure 2a but where a protection flange 205 (described in figure 2b) is installed.

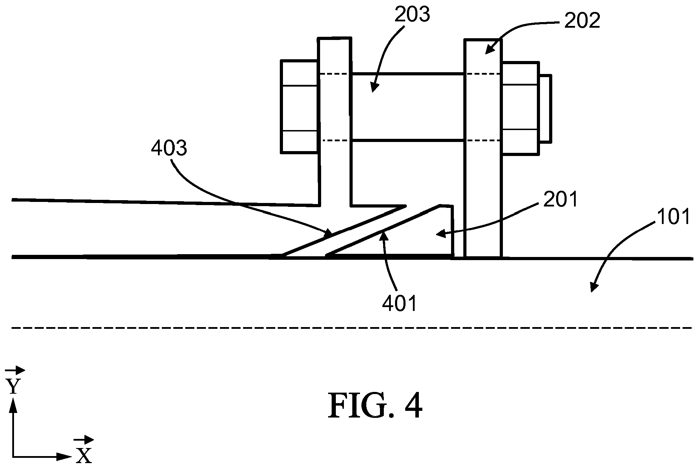

Figure 4 is an enlargement view of the locking ring according to one embodiment of the invention.

In this view, the locking flange 202 is not completely bolted. Therefore, the locking ring 201 is not yet pushed by the locking flange 202, in a longitudinal direction of the pipe 101.

When the locking ring 201 is pushed, the beveled part 401 of the locking ring is pushed against a corresponding beveled portion 403 (having a corresponding shape) connected to the pipe 102 (the beveled portion 403 may be part of the pipe 102 as described in figure 2c or may be part of a middle flange 103 bolted to the pipe 102).

By pushing the locking ring 201 in the -*̅x̅*̅ direction, the locking ring 201 tightens the pipe 101 in the -*̅y̅*̅ direction (due to the configuration of the beveled part and the beveled portion). Therefore, the locking ring may apply a friction force to the pipe 101. The more the locking flange is bolted, the more the friction force is important. Therefore, it is possible to determine very easily the correct bolting that assure a friction force sufficient to resist to a pull-out force in a longitudinal direction of the pipe 101 (ex. more than 60% of any pull-out force that is below a predetermined pull-out force).

## Claims

1. A system to connect a first pipe (101) and a second pipe (102), said system comprising:
- the first pipe (101)
- the second pipe (102)
- a locking ring (201) having a beveled part (401) ;
- a locking flange (202) being connected to the second pipe and being configured to push, in a longitudinal direction of the first pipe, the beveled part (401) of the locking ring (201) against a corresponding beveled portion (403) connected to the second pipe (102) so that a friction force between the locking ring and the first pipe (101) is equal to at least 60% of a pull-out force in response to said pull-out force directed in said longitudinal direction and applied to the first pipe (101).
wherein the corresponding beveled portion (403) is part of a middle flange (103) that is installed between the locking flange (202) and the second pipe (102).
wherein the first pipe (101) has a nozzle recess (104) and wherein the middle flange holds said nozzle recess.

2. The system according to claim 1, wherein the locking ring (201) is an open ring.

3. The system according to one of the preceding claims, wherein the locking ring is formed of metal material.

4. The system according to one on the preceding claims, wherein the locking ring is a translation blocking element for the first pipe in regard of the second pipe.

5. The system according to one of the preceding claims, wherein a coating is installed between the locking ring and the first pipe and wherein the coating is formed of an elastomer material.

6. The system according to one of the preceding claims, wherein the first pipe is formed of at least 60% of High Density Polyethylene.

7. The system according to one of the preceding claims, wherein the first pipe is adapted to be used in an oil offloading line.

## Patentansprüche

1. System zum Verbinden eines ersten Rohres (101) und eines zweiten Rohres (102), wobei das System aufweist:
- das erste Rohr (101)
- das zweite Rohr (102)
- einen Verriegelungsring (201) mit einem abgeschrägten Teil (401);
- einen Verriegelungsflansch (202), der mit dem zweiten Rohr verbunden wird und konfiguriert ist, um den abgeschrägten Teil (401) des Verriegelungsrings (201) in einer Längsrichtung des ersten Rohres gegen einen mit dem zweiten Rohr (102) verbundenen entsprechenden abgeschrägten Abschnitt (403) zu drücken, so dass eine Reibungskraft zwischen dem Verriegelungsring und dem ersten Rohr (101) ansprechend darauf, dass eine Herausziehkraft in die Längsrichtung gerichtet und auf das erste Rohr (101) angewendet wird, gleich mindestens 60% der Herausziehkraft ist,
wobei der entsprechende abgeschrägte Abschnitt (403) Teil eines mittleren Flansches (103) ist, der zwischen dem Verriegelungsflansch (202) und dem zweiten Rohr (102) installiert ist,
wobei das erste Rohr (101) eine Düsenaussparung (104) hat, und wobei der mittlere Flansch diese Düsenaussparung hält.

2. System nach Anspruch 1, wobei der Verriegelungsring (201) ein offener Ring ist.

3. System nach einem der vorhergehenden Ansprüche, wobei der Verriegelungsring aus Metallmaterial ausgebildet ist.

4. System nach einem der vorhergehenden Ansprüche, wobei der Verriegelungsring ein Verschiebungssperrelement für das erste Rohr in Bezug auf das zweite Rohr ist.

5. System nach einem der vorhergehenden Ansprüche, wobei zwischen dem Verriegelungsring und dem ersten Rohr eine Beschichtung installiert ist, und wobei die Beschichtung aus einem Elastomermaterial ausgebildet ist.

6. System nach einem der vorhergehenden Ansprüche, wobei das erste Rohr aus mindestens 60% Polyethylen mit hoher Dichte ausgebildet ist.

7. System nach einem der vorhergehenden Ansprüche, wobei das erste Rohr geeignet ist, als eine Ölentladeleitung verwendet zu werden.

## Revendications

1. Système permettant de relier un premier tuyau (101) et un second tuyau (102), ledit système comprenant :
- le premier tuyau (101) ;
- le second tuyau (102) ;
- une bague de verrouillage (201) comportant une partie biseautée (401) ;
- une bride de verrouillage (202) étant reliée au second tuyau et étant configurée pour pousser, dans une direction longitudinale du premier tuyau, la partie biseautée (401) de la bague de verrouillage (201) contre une portion biseautée correspondante (403) reliée au second tuyau (102) de sorte qu'une force de frottement entre la bague de verrouillage et le premier tuyau (101) soit égale à au moins 60 % d'une force de traction en réponse à ladite force de traction orientée dans ladite direction longitudinale et appliquée au premier tuyau (101),
dans lequel la portion biseautée correspondante (403) fait partie d'une bride centrale (103) qui est installée entre la bride de verrouillage (202) et le second tuyau (102), dans lequel le premier tuyau (101) comporte un évidement de buse (104) et dans lequel la bride centrale contient ledit évidement de buse.

2. Système selon la revendication 1, dans lequel la bague de verrouillage (201) est une bague ouverte.

3. Système selon l'une des revendications précédentes, dans lequel la bague de verrouillage est constituée d'un matériau métallique.

4. Système selon l'une des revendications précédentes, dans lequel la bague de verrouillage est un élément de blocage de translation pour le premier tuyau par rapport au second tuyau.

5. Système selon l'une des revendications précédentes, dans lequel un revêtement est installé entre la bague de verrouillage et le premier tuyau et dans lequel le revêtement est constitué d'un matériau élastomère.

6. Système selon l'une des revendications précédentes, dans lequel le premier tuyau est constitué d'au moins 60 % de polyéthylène haute densité.

7. Système selon l'une des revendications précédentes, dans lequel le premier tuyau est apte à être utilisé dans une ligne de déchargement de pétrole.
